# EUROPEAN PATENT SPECIFICATION

(11) **EP 3 047 173 B1**
(45) Date of publication and mention of the grant of the patent: **30.12.2020**
(21) Application number: 14789381.2
(22) Date of filing: 16.09.2014
(51) Int. Cl.: F16D 65/12, B60K 7/00, B60T 1/10, B60L 7/10, B60L 7/26, H02K 7/102

(54) **DISC FOR DISC BRAKES AND BRAKING SYSTEM COMPRISING SUCH DISC**
SCHEIBE FÜR SCHEIBENBREMSEN UND BREMSSYSTEM MIT SOLCH EINER SCHEIBE
DISQUE POUR FREINS À DISQUE ET SYSTÈME DE FREINAGE COMPRENANT UN TEL DISQUE

(30) Priority: 17.09.2013 IT MI20131531
(43) Date of publication of application: 27.07.2016
(73) Proprietor: Brembo SGL Carbon Ceramic Brakes S.p.A., 24040 Stezzano (BG) (IT)
(72) Inventor: ROZZA, Furio, I-24040 Stezzano (BG) (IT)
(74) Representative: PGA S.p.A.
(86) International application number: PCT/IB2014/064560
(87) International publication number: WO 2015/040544

(56) References cited:
- DE-A1-102004 040 357
- DE-A1-102008 044 786
- JP-A- 2009 210 054
- US-A1- 2009 273 249
- US-B1- 6 308 808

## Description

### Field of the art

The object of the present invention is a disc for disc brakes and a braking system comprising such disc. The invention refers in particular to disc brakes provided with a braking band, made of composite material comprising a carbon matrix or metal material (e.g. iron-carbon alloy), used in order to exert a braking action on vehicles. More particularly but not exclusively, the present invention refers to discs made of carbon and to discs made of carbon-ceramic. A disc brake comprises a drum and a radially external band that is extended around a symmetry axis and has side braking surfaces adapted to cooperate with brake calipers of the vehicle in order to exert a braking action on the vehicle itself. In a disc brake of composite type, the radially external band comprises a carbon matrix.

### State of the art

Known today are energy recovery systems used on racecars (e.g. the kinetic energy recovery system "KERS" in Formula 1) and on road vehicles with the purpose of transforming the mechanical energy that is dissipated during braking into electrical energy for supplying power, for example, to on-board instruments and/or for supplying power to an electric motor connected to the drive wheels in order to have a power reserve that can be used in times of need.

Document US 2009/273249 discloses a hybrid-electric vehicle having a respective electrical machine in each wheel thereof. Each electrical machine is of the axial flux type, having a rotor sandwiched axially between two parts of a stator. Each electrical machine is fitted to the respective wheel such that the rotor takes the place of a disc of a disc brake system and the stator is mounted in place of a calliper of the disc brake system.

Document DE 10 2008 044786 discloses a brake disk supported to rotate around wheel axle and a brake caliper arranged in stationary manner compared to the brake disk. The brake disk and the brake caliper have electrodynamic interactive components of an electromechanical converter for converting electrical energy into kinetic energy.

Document DE 10 2004 040357 discloses a machine having a stator and a rotor, whereby the stator and the rotor are arranged mutually concentrically, the rotor is connected to a component in the form of a shaft or hub rotatable about its axis and a disk brake is provided. The rotor is arranged inside the stator and on a support for the disk of the disk brake.

Document JP 2009 210054 discloses a wheel construction constituted by providing a stator changing a magnetic pole within a caliper generating braking force by pressing a brake pad to friction sliding surfaces of a disk rotor, setting a permanent magnet on the friction sliding surfaces of the disk rotor, and allowing the stator to be set in the drive state that generates driving force rotatably driving the disk rotor and in the regeneration state that generates electromotive force by rotation of the disk rotor. The stator can be brought into close contact with the permanent magnet of the disk rotor and be separated apart from the permanent magnet by hydraulic pressure for a brake.

Document US 6 308 808 discloses a brake disk wherein a material from the carbon group is used for an internally ventilated disk brake. The individual components, such as the friction rings and the ribs, are manufactured individually or partially together and are fastened to one another by way of an unreleasable connection, such a high-temperature welding or gluing.

### Object of the invention

In the scope of energy transformation devices (from electrical to mechanical and vice versa) mounted on vehicles, like that described above, the Applicant has observed that said devices are bulky and heavy and it is necessary to provide for - already during design - the space necessary on board the vehicle where they can be housed.

The Applicant has therefore set the objective of at least partly integrating a device for transforming energy (i.e. an electrical machine) in pre-existing vehicle elements (which *per se* accomplish other tasks), in order to limit the size and weight of the abovementioned device and possibly also allow the direct interaction thereof with said elements of the vehicle.

### Summary of the invention

The Applicant has found that such objective can be obtained by integrating parts of an electrical machine into the braking system. In particular, The Applicant has found that such objective can be obtained by mounting on a disc, in composite material or in metal material (e.g. iron-carbon alloy), of a disc brake, the rotor elements of a rotary electrical machine while the other elements of the electrical machine, including the stator elements, are integral with the vehicle.

The above-indicated objective is substantially reached by a disc for disc brakes and by a braking system according to one or more of the enclosed claims. Aspects of the invention are described hereinbelow.

More specifically, according to one aspect, the present invention regards a disc for disc brakes, comprising a drum and a radially external band that is extended around a symmetry axis, said radially external band having side braking surfaces adapted to cooperate with brake calipers in order to exert a braking action on a vehicle; further comprising rotor elements of a rotary electrical machine adapted to cooperate with stator elements of said rotary electrical machine mounted on the vehicle.

Said radially external band is made of composite material comprising carbon fibers.

The Applicant has verified that such placement of the rotor elements is effective due to the fact that the composite material of the radially external band of the disc (made of carbon and/or carbon-ceramic) has a magnetic permeability "µ " sufficiently high to ensure a correct distribution of the magnetic fields between the rotor elements and the stator elements and hence the correct operation of the electrical machine, better than that allowed by the conventional metal discs.

The rotor elements are either embedded in the composite material or are inserted in housings made in the composite material.

The embedding is executed during the production of composite discs. The radially external band is obtained either by subjecting to heat and pressure resin powders and carbon fibers inserted in a mold in which, for example, the magnetic elements are also inserted in said mold, or the radially external band is made by suitably coupling and/or shaping pieces and/ or strips of fabric made of carbon fiber and subjecting the semifinished product to heat and pressure in which, for example, the magnetic elements are inserted between said pieces/ strips, for example in sheet form.

More preferably, the rotor elements are associated with the disc once the disc (obtained for example with the above-described methods) is substantially finished and shaped in a manner so as to present said housings.

According to a different aspect, the present invention regards a braking system, comprising the above-defined disc; a brake caliper arranged astride the disc; a rotary electrical machine comprising the rotor elements of the disc and stator elements mounted on the vehicle.

A method for producing said disc is defined in claim 14.

By "rotary electrical machine" it is intended in the present description and in the enclosed claims a device adapted to convert electrical energy into mechanical energy and/or mechanical energy into electrical energy, i.e. a motor or a generator, by exploiting the electromagnetic induction.

The Applicant has first of all verified that, given that it is partially integrated in the disc of the braking system, the electrical machine according to the invention is more compact and lighter than the energy transformation devices of known type installed on vehicles.

The Applicant has also verified that the invention ensures a direct interaction of the electrical machine with the wheels of the vehicle, as will be detailed hereinbelow, without the interposition of other transmission elements that would involve negative energy dissipations.

The Applicant has also verified that the quantity of energy that can be recovered with the disc and the system in accordance with the present invention is comparable at least to the quantity of energy recoverable with the known systems, such as "KERS".

The present invention, in at least one of the aforesaid aspects, can have one or more of the preferred characteristics described hereinbelow.

Preferably, the rotor elements are situated in a radially more internal position with respect to the braking surfaces. In such position, the rotor elements, whether they are embedded and covered by the composite material or uncovered and, for example, flush with the same, do not interfere with the pads of the brake caliper which act in contact with the braking surfaces.

Preferably, the disc has ventilation channels and the rotor elements are positioned in said ventilation channels.

In one embodiment, the rotor elements are permanent magnets.

In one embodiment, an auxiliary body is provided that is fixed with respect to the brake caliper, juxtaposed with the disc and comprising the stator elements. In this case, the auxiliary body is dedicated to carrying the stator elements.

Preferably, the auxiliary body is extended like a ring around a radially peripheral edge of the disc along the circumferential extension of said disc.

Preferably, the auxiliary body is placed astride the radially peripheral edge of the disc. In other words, in a section on a radial plane, the auxiliary body has a U shape.

In a different embodiment, the auxiliary body is only placed in radially external position with respect to the radially peripheral edge of the disc.

Preferably, the auxiliary body is positioned on the side opposite a connection of the disc to a wheel and facing the disc.

Preferably, the auxiliary body is fit on the fixed tubular body which carries the shaft of the wheel.

In this manner, the auxiliary body remains hidden and protected behind the disc.

The braking system according to the invention can be implemented on at least one of the axle shafts of a vehicle, preferably on the two front axle shafts or on the two rear axle shafts, more preferably on all axle shafts.

Further characteristics and advantages will be clearer from the detailed description of a preferred but not exclusive embodiment of a method for increasing the performances of a tire for car wheels in accordance with the present invention.

### Brief description of the drawings

Such description will be set forth hereinbelow with reference to the enclosed drawings, provided only as a non-limiting example, in which:
- figure 1 shows a schematic view of a braking system according to the present invention;
- figure 2 is a side view of the braking system of figure 1;
- figure 3 illustrates a schematic view of an embodiment variant of the system of figure 1;
- figure 4 is a side view of the braking system of figure 3;
- figures 5A and 5B illustrate respective views of an embodiment of a braking system not forming part of the present invention;
- figures 6A and 6B illustrate respective views of an embodiment of a braking system not forming part of the present invention;
- figures 7A and 7B illustrate respective views of an embodiment of a braking system not forming part of the present invention.

### Detailed description of preferred embodiments of the invention

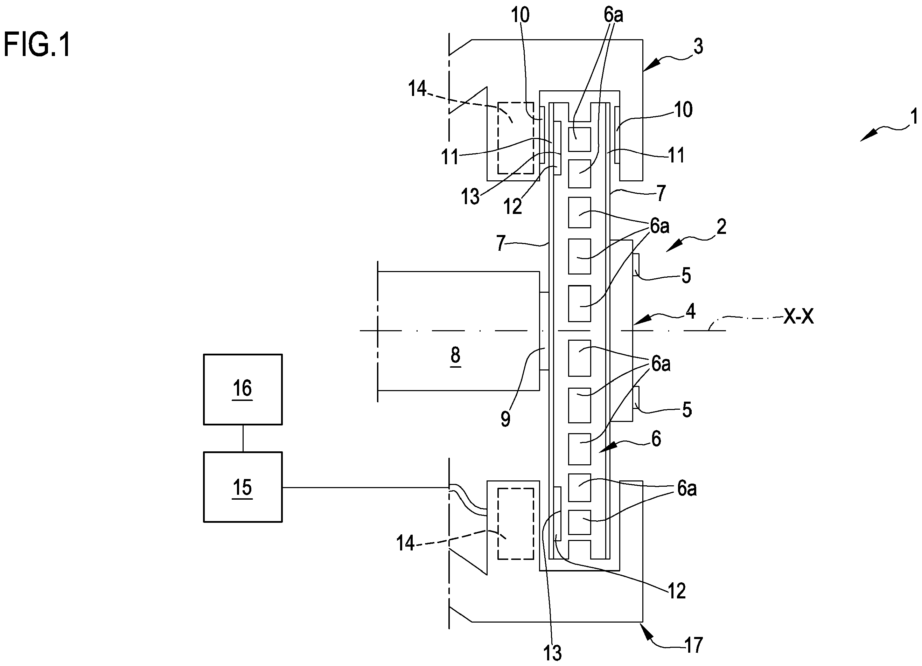

A braking system according to the present invention is indicated in its entirety in figure 1 with the reference number 1. The system 1 comprises a disc 2 of carbon-ceramic type and a caliper 3. The disc 2 comprises a drum 4, for example made of metal material, provided with attachments 5 for joining to the rim of a wheel of a vehicle. Around the drum 4 and integral therewith, a radially external band 6 is situated which constitutes the actual disc and is made of a ceramic matrix in silicon carbide reinforced with carbon fibers. The opposite surfaces of the radially external band 6 are covered with respective protective layers 7 made of ceramic material. The radially external band illustrated in the enclosed figures also has ventilation channels 6a made in the thickness of the band 6 itself which are extended along substantially radial directions and open at a radially peripheral edge of said band 6.

The radially external band 6 is for example obtained by means of the following steps:
- preparing a mixture comprising at least filaments of carbon fibers and at least one organic binder;
- forming, in a mold, the aforesaid mixture in order to obtain a shaped body;
- pyrolyzing the shaped body in order to obtain a porous carbon structure;
- infiltrating the carbon structure with silicon in order to obtain the aforesaid ceramic composite structure substantially with carbon, silicon and silicon carbide base;
- depositing the protective coating on the opposite surfaces.

In an embodiment variant, the radially external band 6 is made of carbon fabric reinforced with carbon fibers.

The caliper 3 is placed astride the radially peripheral edge of the radially external band 6 and is integral with the frame of the vehicle or better yet with the fixed tubular body 8 which carries the rotary shaft 9 integral with the disc 2 and with the wheel. The caliper 3 comprises brake pads 10 facing respective braking surfaces 11 of the radially external band 6 and adapted to cooperate with the brake caliper 3 in order to exert a braking action on the vehicle.

The braking system 1 also comprises a rotary electrical machine at least partially integrated therein.

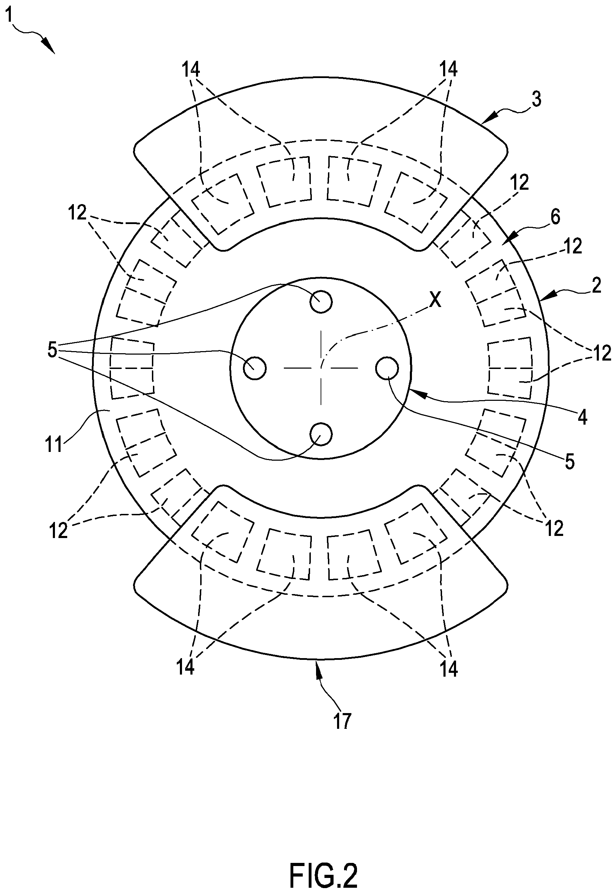

Said rotary electrical machine comprises a plurality of rotor elements 12 inserted in the radially external band 6 of the disc 2. In the embodiment illustrated in figures 1 and 2, said rotor elements 12 are permanent magnets arranged along a circular path coaxial with the symmetry axis "X-X" of the disc 2 (rotation axis of the wheel) and inserted in slots 13 obtained in the composite material of the radially external band 6. The permanent magnets 12 lie flush with the respective surface of the radially external band 6 and are covered by the respective cover layer 7. The permanent magnets 12 are also radially situated at one of the braking surfaces 11. The slots 13 are for example shaped in the step of forming the aforesaid mixture in the mold and the permanent magnets 12 are subsequently inserted, before the application of the cover layer 7. Alternatively, the permanent magnets 12 can be inserted directly in the mold and themselves come to shape the slots 13 where they are housed.

The rotary electrical machine comprises a plurality of stator elements 14 electromagnetically coupled to the rotor elements 12. The stator elements 14, schematically represented in figures 1 and 2, are induced windings and are electrically connected to a control device 15 of the machine itself and to an accumulator 16 (schematically illustrated in figure 1). In the embodiment of figures 1 and 2, said stator elements 14 are installed in a portion of the brake caliper 3 and in an auxiliary body 17. The auxiliary body 17 is mounted astride the radially peripheral edge of the radially external band 6 and is integral with the frame of the vehicle or better yet with the fixed tubular body 8 that carries the rotary shaft 9 integral with the disc 2 and with the wheel. The auxiliary body 17 is installed on the disc 2 in a diametrically opposite position with respect to the brake caliper 3 (figure 2). In non-illustrated embodiment variants of the above-described form, said stator elements 14 are only installed in the brake caliper 3 or only in the auxiliary body 17.

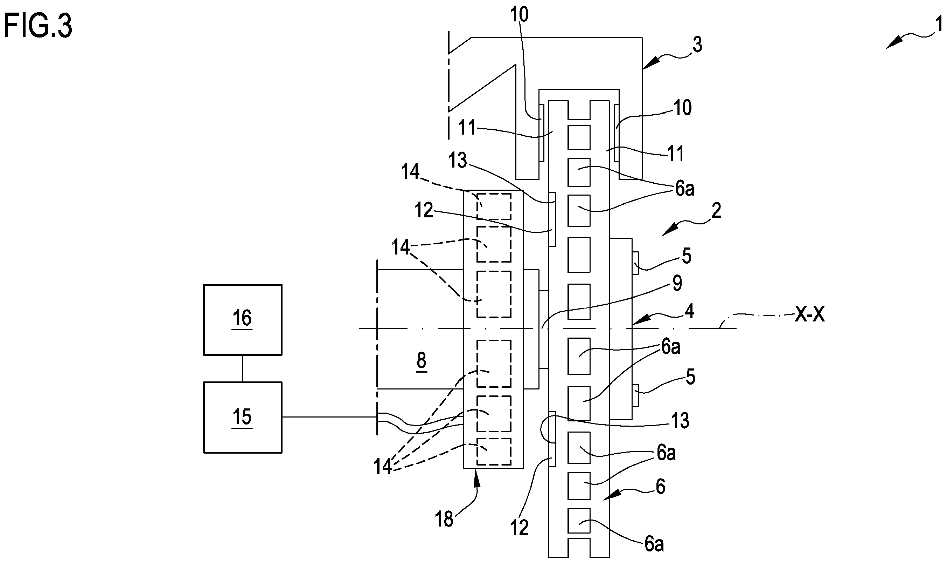

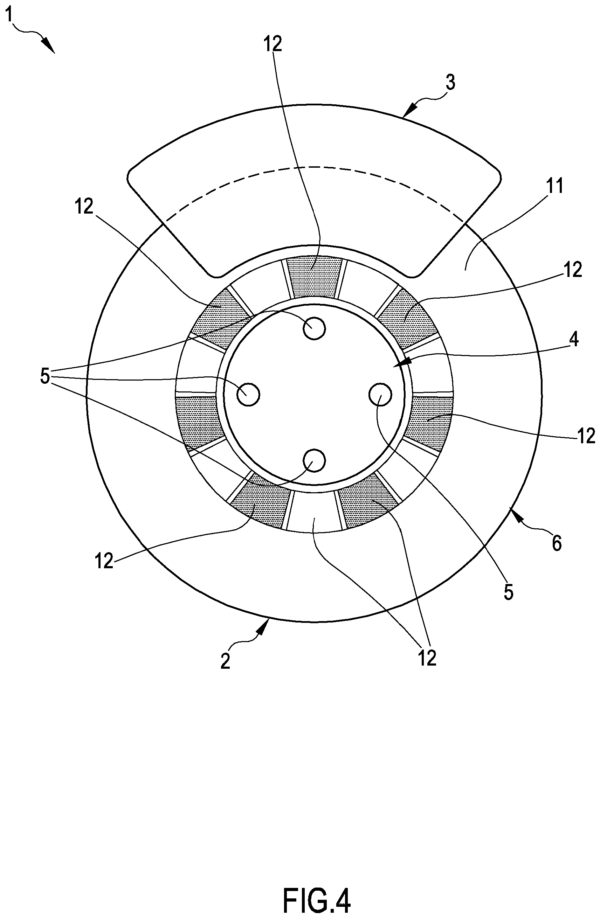

In the embodiment illustrated in figures 3 and 4, the cover layers 7 (of the embodiment of figures 1 and 2) are not present and the permanent magnets 12 are positioned at a radially internal zone with respect to the braking surfaces 11 on which the caliper 3 acts.

In addition, the stator elements 14 have a different placement. In particular, the stator elements 14 are mounted in an auxiliary body 18 fit on the fixed tubular body 8 which carries the rotary shaft 9 integral with the disc 2. The stator elements 14 are arranged around the symmetry axis "X-X" along a circular path and are axially facing the permanent magnets 12.

In other non-illustrated embodiments, the rotor elements 12 are situated in the ventilation channels 6a and/or in other parts of the radially external band 6, completely immersed/embedded in the composite material.

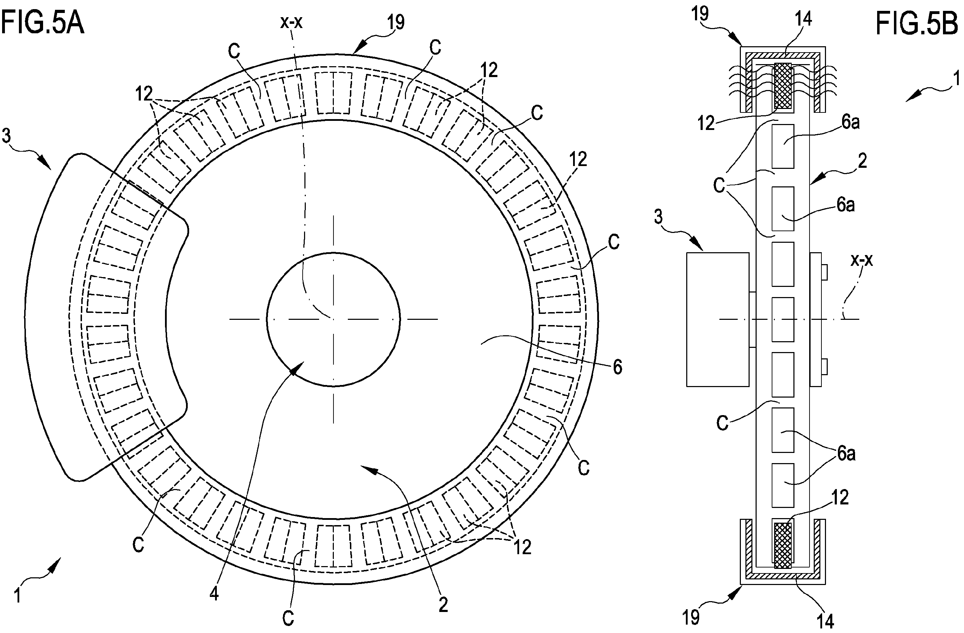

In a further embodiment, illustrated in figure 5A and in figure 5B, the disc 2 is made of metal material, preferably iron-carbon alloy, and the rotor elements 12 are permanent magnets housed in the ventilation channels 6a and at a radially peripheral portion of the disc 2 itself. The permanent magnets 12 are therefore arranged in series one after the other along a circumferential path. The walls of the ventilation channels 6a define parts made of conductive material "C" interposed between the rotor elements 12. The rotor elements 12 therefore define a periodic ferromagnetic structure with the parts made of conductive material "C" interposed with each other. The stator elements 14 (only illustrated in figure 5B) are constituted by U-shaped windings, arranged in series all around the disc 2. Each of the U-shaped stator elements is placed astride the radially peripheral edge of the disc 2 (figure 5B). The described stator elements 14 are partly housed in the brake caliper 3 and are supported thereby (for an arc of circumference corresponding to the extension of said caliper 3) and are partly housed in the auxiliary body 19 and are supported thereby. Such auxiliary body 19 is extended like a ring around the disc 2, except where the caliper 3 is present, and it too has a U-shape form in a radial plane. The electrical machine of such embodiment is an asynchronous axial machine where the interrupted magnetic flow has axial orientation, i.e. parallel to the rotation axis "X-X" of the disc 2. In a non-illustrated variant of the asynchronous axial machine, in place of the permanent magnets specific windings are present.

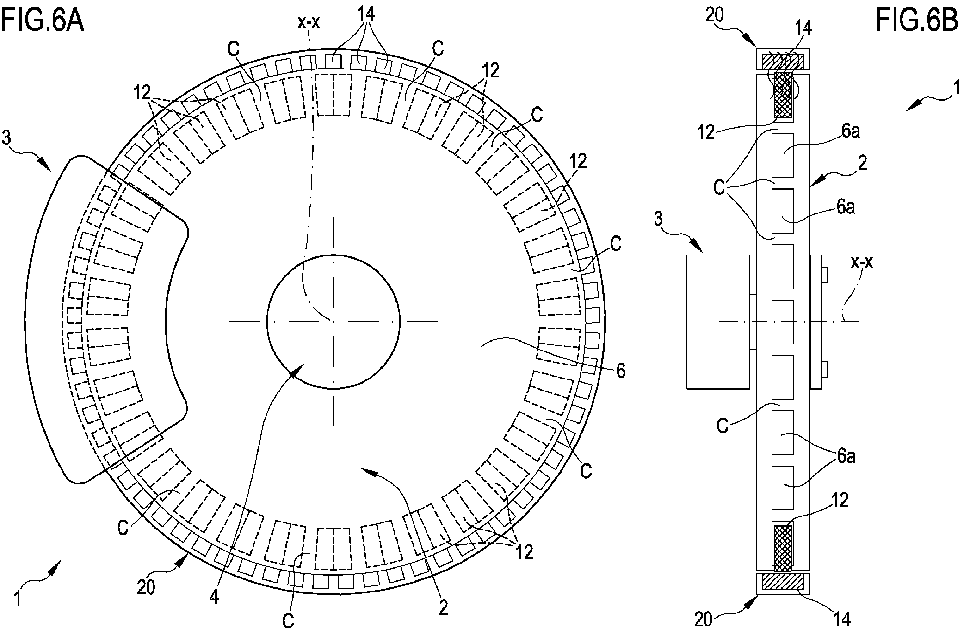

The further embodiment illustrated in figure 6A and in figure 6B is geometrically similar to the preceding one. Unlike the previous embodiment, the stator elements 14 are windings localized only circumferentially on the external diameter of the disc 2 where the interrupted magnetic flow has radial orientation. The auxiliary body 20 that supports the stator elements 14 is only placed in radially external position with respect to the disc 2 (it is not extended astride the disc 2) and is extended axially for a width corresponding substantially to the thickness of said disc 2.

Figures 6A and 6B represent both an asynchronous radial machine (in such case the stator elements 12 are constituted by specific windings) and a synchronous reluctance radial machine (in such case the stator elements 12 are constituted by permanent magnets).

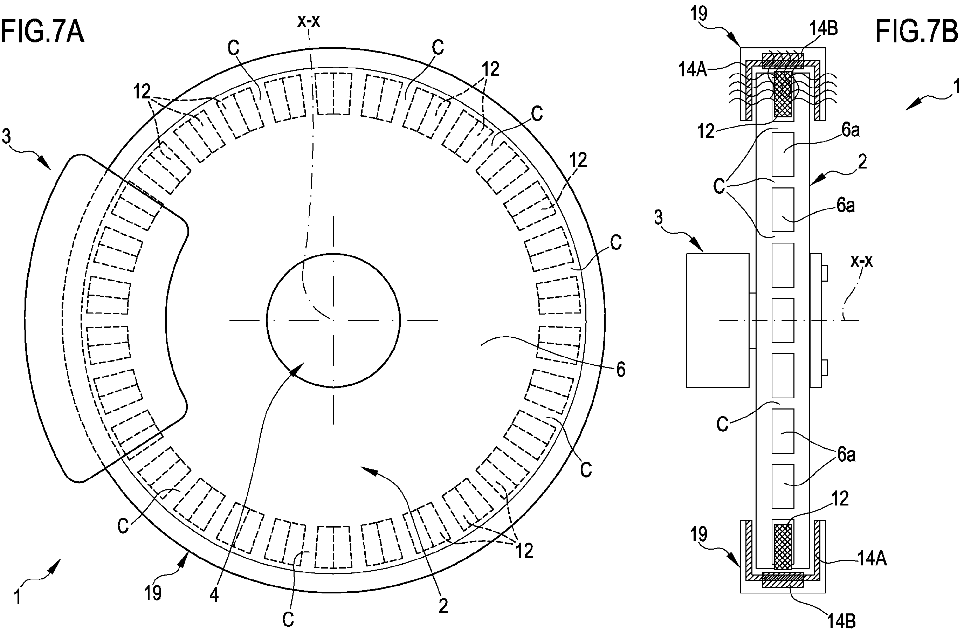

In the synchronous reluctance rotary machine, capable of a continuous movement, the auxiliary body 20 is constituted by or comprises a ferromagnetic cylindrical crown (stator) in which three windings 14 are situated with equivalent mutual spatial displacement and a three-phase alternating current system runs through them. This produces a rotating magnetic field whose effect is equivalent to that which is obtained by rotating the fixed part of the structure. If the disc assumes an angular velocity equal to that of the rotating magnetic field, the angle remains constant and the torque constant therewith, which supports the rotation thereof. The further embodiment illustrated in figure 7A and in figure 7B is a combination of the above-described types illustrated in figures 5A, 5B, 6A, 6B, and it is an axial/radial hybrid machine. The auxiliary body 19 is similar to that illustrated in figures 5A and 5B. Such auxiliary body 19 houses a first group of stator elements 14A with structure equivalent to or similar to that of the stator elements 14 illustrated in figure 5B and constituted by U-shaped windings arranged in series all around the disc 2. The same auxiliary body 19 also houses a second group of stator elements 14B with structure equivalent to or similar to that of the stator elements 14 illustrated in figure 6B and constituted by windings localized only circumferentially on the external diameter of the disc 2. The path of the flow is therefore transverse (both in axial and radial direction).

The described rotary electrical machine can function as a generator and/or as a motor.

In a preferred embodiment, the rotary electrical machine is a generator. The rotation of the wheels, of the brake discs 2 integral therewith and of the permanent magnets 12 generates a current in the windings of the stator elements 14. The mechanical energy transformed into electrical energy is stored in the accumulator 16.

It is preferable that such operation occurs in braking phase, i.e. when the endothermic motor does not apply a drive torque to the wheels. In such case, it is the energy associated with the braking torque exerted by the calipers that is transformed in electrical energy.

For such purpose, the control device 15 controls the conversion of energy in a manner so as to ensure that such recovery is possible.

It is in any case possible that the conversion also occurs when the vehicle is running with the motor that transmits torque to the wheels. In such condition, however, it is part of the power of the endothermic motor that is transformed into electrical energy.

In a preferred embodiment, the rotary electrical machine is also a motor. The electrical energy accumulated in the accumulator 16 supplies power to the stator elements 14 which induce an electromagnetic drive torque on the rotor, i.e. on the brake disc 2 and on the wheel associated therewith. Such electromagnetic drive torque can be used for integrating the torque of the endothermic motor in acceleration or the action of the calipers in braking.

In an alternative embodiment, the energy stored in the accumulator 16 can be transferred to the battery of a hybrid/electric vehicle, in a manner so as to increase the duration thereof, ensuring a greater kilometer distance run and/or greater power of the vehicle.

In a variant embodiment, the accumulated energy can be used for supplying power to a further and different electric motor operatively coupled to the motor shaft.

## Claims

1. Disc for disc brakes, comprising:
a drum (4) and a radially external band (6) that is extended around a symmetry axis (X-X), said radially external band (6) having side braking surfaces (11) adapted to cooperate with brake calipers (3) in order to exert a braking action on a vehicle;
rotor elements (12) of a rotary electrical machine (12, 14, 15, 17; 12, 14, 15, 18) adapted to cooperate with stator elements (14) of said rotary electrical machine (12, 14, 15, 17; 12, 14, 15, 18) mounted on the vehicle;
**characterized in that** said radially external band (6) is made of composite material comprising carbon fibers; and **in that** the rotor elements (12) are embedded in the composite material or inserted in housings (13) made in the composite material.

2. Disc according to claim 1, wherein the rotor elements (12) are situated in a radially more internal position with respect to the braking surfaces (11).

3. Disc according to one of the preceding claims, wherein the disc (2) has ventilation channels (6a) and the rotor elements (12) are positioned in said ventilation channels (6a).

4. Disc according to one of the preceding claims, wherein the rotor elements (12) are permanent magnets.

5. Braking system, comprising:
a disc (2) according to one or more of the claims from 1 to 4;
a brake caliper (3) arranged astride the disc (2);
a rotary electrical machine (12, 14, 15, 17; 12, 14, 15, 18) comprising the rotor elements (12) of the disc (2) and stator elements (14) for being mounted on a vehicle.

6. Braking system according to claim 5, wherein the stator elements (14) are only situated in radially external position with respect to the rotor elements (12).

7. Braking system according to claim 5, wherein the stator elements (14) are only situated in radially internal position with respect to the rotor elements (12).

8. Braking system according to one of the preceding claims from 5 to 7, comprising an auxiliary body (17; 18) that is fixed with respect to the brake caliper (3), juxtaposed with the disc (2) and comprising the stator elements (14).

9. Braking system according to the preceding claim, wherein the auxiliary body (19, 20) is extended like a ring around a radially peripheral edge of the disc (2) along the circumferential extension of said disc (2).

10. Braking system according to the preceding claim, wherein the auxiliary body (20) is only placed in radially external position with respect to the radially peripheral edge of the disc (2).

11. Braking system according to claim 9, wherein the auxiliary body (17) is placed astride the radially peripheral edge of the disc (2).

12. Braking system according to claim 5, wherein the auxiliary body (18) is positioned on the side opposite a connection (5) of the disc (2) to a wheel and facing the disc (2).

13. Braking system according to claim 12, wherein the auxiliary body (17) is fit on a tubular body (8) carrying the shaft (9) of the wheel.

14. A method for the production of the composite disc of claim 1, wherein the radially external band (6) is obtained by subjecting to heat and pressure resin powders and carbon fibers inserted in a mold or wherein the radially external band (6) is made by coupling and/or shaping pieces and/or strips of fabric made of carbon fiber and subjecting the semifinished product to heat and pressure.

15. The method of claim 14, wherein the rotor elements (12) are inserted in said mold or between said pieces/strips or wherein the rotor elements (12) are associated with the disc once the disc is substantially finished and shaped in a manner so as to present the housings (13).

## Patentansprüche

1. Scheibe für Scheibenbremsen, umfassend:
eine Trommel (4) und ein radial äußeres Band (6), welches sich um eine Symmetrieachse (X-X) erstreckt, wobei das radial äußere Band (6) seitliche Bremsflächen (11) aufweist, welche dazu eingerichtet sind, mit Bremssätteln (3) zusammenzuwirken, um eine Bremswirkung auf ein Fahrzeug auszuüben;
Rotorelemente (12) einer rotierenden elektrischen Maschine (12, 14, 15, 17; 12, 14, 15, 18), welche dazu eingerichtet sind, mit Statorelementen (14) der rotierenden elektrischen Maschine (12, 14, 15, 17; 12, 14, 15, 18) zusammenzuwirken, welche an dem Fahrzeug montiert sind;
**dadurch gekennzeichnet, dass** das radial äußere Band (6) aus einem Verbundmaterial hergestellt ist, welches Carbon-Fasern umfasst; und dadurch, dass die Rotorelemente (12) in das Verbundmaterial eingebettet oder in Aufnahmen (13) eingesetzt sind, welche in dem Verbundmaterial hergestellt sind.

2. Scheibe nach Anspruch 1, wobei die Rotorelemente (12) in Bezug auf die Bremsflächen (11) in einer radial weiter innen liegenden Position angeordnet sind.

3. Scheibe nach einem der vorhergehenden Ansprüche, wobei die Scheibe (2) Ventilationskanäle (6a) aufweist und die Rotorelemente (12) in den Ventilationskanälen (6a) positioniert sind.

4. Scheibe nach einem der vorhergehenden Ansprüche, wobei die Rotorelemente (12) Permanentmagnete sind.

5. Bremssystem, umfassend:
eine Scheibe (2) nach einem oder mehreren der Ansprüche von 1 bis 4;
einen Bremssattel (3), welcher rittlings der Scheibe (2) angeordnet ist;
eine rotierende elektrische Maschine (12, 14, 15, 17; 12, 14, 15, 18), welche die Rotorelemente (12) der Scheibe (2) und die Statorelemente (14) umfasst, welche an einem Fahrzeug zu montieren sind.

6. Bremssystem nach Anspruch 5, wobei die Statorelemente (14) nur in einer in Bezug auf die Rotorelemente (12) radial äußeren Position angeordnet sind.

7. Bremssystem nach Anspruch 5, wobei die Statorelemente (14) nur in einer in Bezug auf die Rotorelemente (12) radial inneren Position angeordnet sind.

8. Bremssystem nach einem der vorhergehenden Ansprüche von 5 bis 7, umfassend einen Hilfskörper (17; 18), welcher in Bezug auf den Bremssattel (3) fixiert ist, der Scheibe (2) gegenüberliegt und die Statorelemente (14) umfasst.

9. Bremssystem nach dem vorhergehenden Anspruch, wobei sich der Hilfskörper (19, 20) wie ein Ring um einen radialen Umfangsrand der Scheibe (2) entlang der Umfangserstreckung der Scheibe (2) erstreckt.

10. Bremssystem nach dem vorhergehenden Anspruch, wobei der Hilfskörper (20) in Bezug auf den radialen Umfangsrand der Scheibe (2) nur in einer radial äußeren Position platziert ist.

11. Bremssystem nach Anspruch 9, wobei der Hilfskörper (17) rittlings des radialen Umfangsrands an der Scheibe (2) platziert ist.

12. Bremssystem nach Anspruch 5, wobei der Hilfskörper (18) an der Seite positioniert ist, welche einer Verbindung (5) der Scheibe (2) mit einem Rad entgegengesetzt ist, und der Scheibe (2) zugewandt ist.

13. Bremssystem nach Anspruch 12, wobei der Hilfskörper (17) an einem röhrenförmigen Körper (8) angebracht ist, welcher die Welle (9) des Rades trägt.

14. Verfahren zur Herstellung der Verbundscheibe nach Anspruch 1, wobei das radial äußere Band (6) erhalten wird, indem Harzpulver und Carbon-Fasern, welche in eine Form eingesetzt sind, Wärme und Druck ausgesetzt werden, oder wobei das radial äußere Band (6) hergestellt wird, indem Stücke und/oder Streifen eines Gewebes, welches aus Carbon-Faser hergestellt ist, gekoppelt und/oder geformt werden und das halbfertige Produkt Wärme und Druck ausgesetzt wird.

15. Verfahren nach Anspruch 14, wobei die Rotorelemente (12) in die Form oder zwischen die Stücke/Streifen eingesetzt werden oder wobei die Rotorelemente (12) der Scheibe zugeordnet werden, sobald die Scheibe im Wesentlichen fertiggestellt und in einer Art und Weise geformt ist, dass sie die Aufnahmen (13) zeigt.

## Revendications

1. Disque pour freins à disque, comprenant :
un tambour (4) et une bande radialement externe (6) qui s'étend autour d'un axe de symétrie (X-X), ladite bande radialement externe (6) présentant des surfaces de frein latérales (11) adaptées pour coopérer avec les étriers de frein (3) afin d'exercer une action de freinage sur un véhicule ;
des éléments de rotor (12) d'une machine électrique rotative (12, 14, 15, 17 ; 12, 14, 15, 18) adaptés pour coopérer avec des éléments de stator (14) de ladite machine électrique rotative (12, 14, 15, 17 ; 12, 14, 15, 18) montée sur le véhicule ;
**caractérisé en ce que** ladite bande radialement externe (6) est constituée de matériau composite comprenant des fibres de carbone ; et **en ce que** les éléments de rotor (12) sont enchâssés dans le matériau composite ou insérés dans des logements (13) constitués du matériau composite.

2. Disque selon la revendication 1, les éléments de rotor (12) étant situés dans une position radialement plus interne par rapport aux surfaces de freinage (11).

3. Disque selon l'une quelconque des revendications précédentes, le disque (2) ayant des canaux de ventilation (6a) et les éléments de rotor (12) étant positionnés dans lesdits canaux de ventilation (6a).

4. Disque selon l'une quelconque des revendications précédentes, les éléments de rotor (12) étant des aimants permanents.

5. Système de freinage, comprenant :
un disque (2) selon l'une ou plusieurs des revendications de 1 à 4 ;
un étrier de frein (3) disposé à cheval sur le disque (2) ;
une machine électrique rotative (12, 14, 15, 17 ; 12, 14, 15, 18) comprenant les éléments de rotor (12) du disque (2) et les éléments de stator (14) pour être montée sur un véhicule.

6. Système de freinage selon la revendication 5, les éléments de stator (14) étant uniquement situés en position radialement externe par rapport aux éléments de rotor (12).

7. Système de freinage selon la revendication 5, les éléments de stator (14) étant uniquement situés en position radialement interne par rapport aux éléments de rotor (12).

8. Système de freinage selon l'une quelconque des revendications précédentes de 5 à 7, comprenant un corps auxiliaire (17 ; 18) qui est fixé par rapport à l'étrier de frein (3), juxtaposé avec le disque (2) et comprenant les éléments de stator (14).

9. Système de freinage selon la revendication précédente, le corps auxiliaire (19, 20) s'étendant comme un anneau autour d'un bord radialement périphérique du disque (2) le long de l'extension circonférentielle dudit disque (2).

10. Système de freinage selon la revendication précédente, le corps auxiliaire (20) étant uniquement placé en position radialement externe par rapport au bord radialement périphérique du disque (2).

11. Système de freinage selon la revendication 9, le corps auxiliaire (17) étant placé à cheval sur le bord radialement périphérique du disque (2).

12. Système de freinage selon la revendication 5, le corps auxiliaire (18) étant positionné sur le côté opposé à une connexion (5) du disque (2) à une roue et faisant face au disque (2).

13. Système de freinage selon la revendication 12, le corps auxiliaire (17) étant ajusté sur un corps tubulaire (8) portant l'arbre (9) de la roue.

14. Procédé de production du disque composite selon la revendication 1, la bande radialement externe (6) étant obtenue par soumission à la chaleur et à la pression de poudres de résine et de fibres de carbone insérées dans un moule ou la bande radialement externe (6) étant constituée par accouplement et/ou mise en forme de pièces et/ou de bandes de tissu constitué de fibre de carbone et par soumission du produit semi-fini à la chaleur et à la pression.

15. Procédé selon la revendication 14, les éléments de rotor (12) étant insérés dans ledit moule ou entre lesdites pièces/bandes ou les éléments de rotor (12) étant associés au disque une fois que le disque est sensiblement fini et mis en forme d'une manière permettant de présenter les logements (13).
